Europäisches Patentamt

**European Patent Office**

Office européen des brevets

(11) Veröffentlichungsnummer: **0 221 355**

**B1**

(12) **EUROPÄISCHE PATENTSCHRIFT**

(45) Veröffentlichungstag der Patentschrift:
28.02.90

(21) Anmeldenummer: **86113621.6**

(22) Anmeldetag: **02.10.86**

(51) Int. Cl. ⁵: **B 29 C 47/68**

(54) Vorrichtung und Verfahren für die Reinigung von viskosen Materialien.

(30) Priorität: **04.10.85 DE 3535491**

(43) Veröffentlichungstag der Anmeldung:
**13.05.87 Patentblatt 87/20**

(45) Bekanntmachung des Hinweises auf die Patenterteilung:
**28.02.90 Patentblatt 90/09**

㊽ Bennante Vertragsstaaten:
**AT BE CH DE ES FR GB IT LI NL SE**

(56) Entgegenhaltungen:
**DE-A-1 965 189**
**FR-A-1 527 722**
**US-A-3 855 126**
**US-A-4 358 262**

(73) Patentinhaber: **Britchi, Lucian**
**Philipp-Weber-Strasse 5**
**D-6457 Maintal 3 (DE)**

(72) Erfinder: **Britchi, Lucian**
**Philipp-Weber-Strasse 5**
**D-6457 Maintal 3 (DE)**

(74) Vertreter: **Schickedanz, Willi, Dipl.-Ing.**
**Langener Strasse 68**
**D-6050 Offenbach/Main (DE)**

EP 0 221 355 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBERGRAF, STOCKHOLM 1990

## Beschreibung

Die Erfindung betrifft eine Vorrichtung für die Reinigung von viskosen Materialien, mit einer Einrichtung, welche das viskose Material durch ein Reinigungssieb drückt, das bandförmig ausgebildet und quer zur Flußrichtung des viskosen Materials beweglich ist, sowie ein Verfahren für die Reinigung von viskosen Materialien, wobei die viskosen Materialien im geschmolzenen Zustand und unter Druck ein bewegliches bandförmiges Filter gegeben werden, dessen dem Versorgungsraum zugewandte Seite Verunreinigungen zurückhält.

Unter viskosen Materialien werden in erster Linie zähflüssige Materialien verstanden, z. B. Motorenöle, Honig oder durch Erwärmung verflüssigte Kunststoffe. Insbesondere bei der Wiederaufbereitung von Kunststoffen spielen Reinigungsprozesse eine große Rolle.

Kunststoffe werden in der chemischen Industrie zunächst in Pulverform hergestellt und dann, wegen der besseren Handhabung, in Granulate umgewandelt. Diese Granulate werden in den Handel gebracht und von den Herstellern von Kunststoffartikeln verarbeitet. Mit Hilfe von sogenannten Extrudern werden die geschmolzenen Granulate zu Rohren, Folien und dergleichen geformt.

Da die von der chemischen Industrie hergestellten Granulate relativ rein sind, ist eine besondere Reinigung vor dem Extrudieren im allgemeinen nicht erforderlich. Ist allerdings ein sehr hoher Reinheitsgrad bei den Endprodukten erwünscht, so werden auch bei erstmalig verwendeten Granulaten Siebe eingesetzt, um eventuelle Verunreinigungen zu beseitigen.

Eine Reinigung der Kunststoff-Rohmaterialien ist regelmäßig dann angebracht, wenn es sich um die Wiederaufbereitung bereits verwendeter Kunststoffe handelt. Gebrauchte Kunststoffolien, Kunststoffrohre und andere Gegenstände aus Kunststoff, die einem sogenannten Recycling-Verfahren unterworfen werden, müssen deshalb regelmäßig gereinigt werden.

Ein solcher Reinigungsprozeß besteht z. B. darin, daß die gebrauchten Kunststoffgegenstände gewaschen, getrocknet und einer Schmelzvorrichtung mit Reinigungssieb zugeführt werden. Die geschmolzenen Kunststoffmassen werden durch das Reinigungssieb gepreßt, wo die Verunreinigungen hängen bleiben. Nach einer bestimmten Zeit ist das Reinigungssieb derart verschmutzt, daß es ausgewechselt werden muß.

Um das Auswechseln des Siebs zu erleichtern, sind bereits verschiedene Siebwechseleinrichtungen vorgeschlagen worden (vergl. z. B. GB-PS-1 047 533).

Hierbei werden zwei Haupttypen unterschieden; die Siebwechseleinrichtung ohne Unterbrechung des Schmelzflusses beim Siebwechsel und die Siebwechseleinrichtung mit kurzzeitiger Unterbrechung des Schmelzflusses beim Siebwechsel.

Bei der erstgenannten Einrichtung wird der Schmelzstrom während der Produktion innerhalb des Siebwechselgehäuses in zwei Kanäle geteilt und je über eine Siebstelle geleitet, die, bestehend aus Siebpaket und Siebstützplatte, in jeweils einem Siebbolzen angeordnet ist. Zum Siebwechsel wird durch manuelle Betätigung eines Hydraulikzylinders die Siebstelle eines Siebbolzens aus dem Gehäuse herausgefahren. Der rückwärtige Teil des ausgefahrenen Siebbolzens dichtet hierbei den Flußkanal ab, und die Produktion erfolgt weiter über die zweite im Gehäuse befindliche Siebstelle. Nach dem Einsetzen eines sauberen Siebpakets wird der Siebbolzen mit Stop in den Schmelzfluß zurückgefahren. Bei der Siebwechseleinrichtung mit Unterbrechung wird der Schmelzstrom nur über einen Kanal und eine Siebstelle geführt. Zum Siebwechsel muß der Schmelzzufluß unterbrochen werden, damit der Siebbolzen mit Siebstelle mittels Hydraulikzylinder aus dem Gehäuse ausgefahren werden kann.

Nachteilig ist bei diesen bekannten Siebwechseleinrichtungen, daß die Person, welche die Einrichtung bedient, oft Schwierigkeiten hat, das verschmutzte Sieb schnell gegen ein unverschmutztes Sieb auszutauschen, denn bei einigen Rohmaterialien verschmutzen die Siebe etwa alle 30 Sekunden.

Es sind deshalb anstelle von Einzelsieben, die nach ihrer Verschmutzung ausgetauscht werden müssen, auch schon Sieb-Bänder vorgeschlagen worden, die nach der Verschmutzung einer Bandstelle einfach weitergezogen werden.

Hierbei treten jedoch Dichtungsprobleme auf, denn jedesmal dann, wenn ein Sieb-Band weitergeschoben werden soll, müssen die Klemmbacken, die es zuvor fest eingespannt hielten, gelöst werden. Das Lösen dieser Klemmbacken ermöglicht es jedoch dem unter sehr hohen Druck stehenden flüssigen Kunststoff, durch die entstehenden Ritzen nach außen zu dringen. In kurzer Zeit sammeln sich deshalb außerhalb der Einrichtung große Mengen von Kunststoff an.

Um ein unerwünschtes Herausquetschen von Flüssigkeiten oder dergleichen zu verhindern, wurden bereits aufblasbare Dichtungsschläuche vorgeschlagen, welche im aufgeblasenen Zustand von beiden Seiten unter Druck am Filterband anliegen (US-PS-2 867 324). Bei Filtereinrichtungen für thermoplastische Kunststoffe, wo Drücke in der Größenordnung von 700 kp/cm² auftreten können, sind derartige Gummischlauchdichtungen jedoch nicht mehr anwendbar.

Ein weiteres Verfahren, mit dem das Nach-Außen-Dringen von zähflüssigen Substanzen aus einer Filteranlage verhindert werden soll, besteht darin, daß beim Filtern die Temperatur in der Preßvorrichtung an den Durchtrittsöffnungen des Filterbandes derart eingestellt wird, daß sich die zu filternde Substanz an diesen Durchtrittsöffnungen unter Bildung von Dichtpfropfen verfestigt (DE-PS-1 611 132). Nachteilig ist hierbei jedoch, daß besondere Kühlmittelkanäle und besondere Heizeinrichtungen vorgesehen werden müssen.

Dieser Nachteil wird auch nicht dadurch aufgehoben, daß zur Bildung von Dichtungspfropfen wenigstens in einer der Durchtrittsöffnungen eine Dichtungssubstanz verwendet wird, die von der zu filternden Substanz verschieden ist (DE-PS-1 944 704), denn hierdurch wird das ganze Dichtungsverfahren nur noch aufwendiger.

Bei einer anderen bekannten Vorrichtung, die den Transport des Filterbands erleichtern soll, wird die Bewegung des Filterbands durch Herabsetzung der Reibungskräfte erleichtert, statt nur versucht, diese Reibungskräfte zu überwinden (DE-PS-2 319 270). Hierbei wird die Filteranordnung auf einer Seite, die der dem Druck der zu filternden Substanz ausgesetzten Seite des Filterteils gegenüberliegt, durch fließfähiges Medium abgestützt, dessen Druck vom Druck der durch das Filterteil zu filternden Substanz abhängt. Außerdem weist die Filteranordnung wenigstens einen inneren Bereich auf, in den die gefilterte Substanz aus dem Filterteil eindringt und der zur Abführung der gefilterten Substanz mit wenigstens einem Kanal kommuniziert. Diese Maßnahme vermindert zwar den einseitigen Druck auf das Filterband, indem sie auf der anderen Seite einen entsprechenden Gegendruck ausübt, sie trägt jedoch nichts zur Lösung des Dichtungsproblems bei.

In einer weiteren Einrichtung, mit welcher eine Verschiebung des Filters mit verhältnismäßig geringer Kraft möglich ist, ohne daß das Filter stärkeren inneren Spannungen ausgesetzt wird, ist eine Gegenanlage vorgesehen, welche in der Verschieberichtung des Filters durch einen Antrieb hin- und herbewegbar ist (DE-PS-2 343 553, US-PS-3 855 126, US-PS-3 856 680).

Die Bewegung der Gegenanlage erfolgt hierbei parallel zur Filteroberfläche und unterstützt gewissermaßen den Weitertransport des Filters. Die zusätzliche Gegenanlage ist indessen relativ aufwendig.

Es ist auch noch eine Hochdruck-Kunststoff-Recycling-Presse bekannt, bei der eine Axialverschiebung des Stützbodens für eine zeitweise Verklemmung bzw. spätere Freigabe der Siebbandkombination ermöglicht wird (US-A-2 507 311, Sp. 9, Z. 60 bis 64). Auch hierdurch wird kein merklicher Beitrag zur Lösung des Dichtungsproblems geleistet.

Ein Bandsieb, das quer zur Flußrichtung des viskosen Materials beweglich ist und das an einer durchbohrten Druckplatte vorbeiläuft, ist ebenfalls bekannt (FR-A-1 527 722). Eine Möglichkeit, das Bandsieb während des Betriebs zu bewegen, ohne daß das viskose Material nach außen tritt, besteht hierbei nicht.

Schließlich ist auch noch eine Vorrichtung für die Reinigung von viskosen Materialien bekannt, die eine Einrichtung aufweist, welche das viskose Material durch ein Reinigungssieb drückt (DE-A-1 965 189). Diese Vorrichtung besitzt auch noch einen Sperrschieber, der mit Hilfe einer Gewindespindel verschoben werden kann und hierdurch einen Durchgang von einem ersten Kanal zu einem zweiten nach außen offenen Kanal freigibt, wodurch eine Volumenänderung auftritt und wodurch ein Massestrom senkrecht zur Extrusionsrichtung nach außen abfließt und am Sieb haftende Schmutzteilchen. Das Reinigungssieb, ist jedoch nicht bandförmig und nicht quer zur Flußrichtung des viskosen Materials beweglich.

Der Erfindung liegt deshalb die Aufgabe zugrunde, bei einer Reinigungsanlage für viskose Medien, die ein Filterband aufweist, das Herausdringen des viskosen Mediums aus der Anlage während des Weitertransports des Filterbands zu verhindern.

Diese Aufgabe wird dadurch gelöst, daß der Raum vor dem Reinigungssieb, der das zu reinigende Material aufnimmt, nach außen hin geschlossen bleibt und wenigstens zeitweise volumenmäßig veränderbar ist, so daß der durch das zu reinigende Material auf das Reinigungssieb ausgeübte Druck aufgrund der Volumenänderung variabel ist, um den Weitertransport des Reinigungssiebs zu ermöglichen.

Der mit der Erfindung erzielte Vorteil besteht insbesondere darin, daß aufgrund der erheblichen Herabsetzung des Drucks des Mediums während des Weitertransports des Siebbands das viskose Medium nicht durch die entstehenden Spalten entweichen kann. Hierdurch wird eine Verschmutzung der gesamten Anlage, die sehr schnell zur Funktionsunfähigkeit führen kann, vermieden. Insbesondere bei viskosen Materialien, die bei normaler Außentemperatur aushärten, ist dies von großer Bedeutung. Gegenüber den bereits bekannten Verfahren zur Abdichtung von Spalten ist die erfindungsgemäße Vorrichtung nicht auf die Anwendung auf solche Stoffe beschränkt, die durch Abkühlung schnell erhärten, sondern es können auch Stoffe gereinigt werden, die in weiten Temperaturbereichen nicht erhärten.

Ausführungsbeispiele der Erfindung sind in der Zeichnung dargestellt und werden im folgenden näher beschrieben. Es zeigen:

Fig. 1a  eine erste erfindungsgemäße Vorrichtung, wobei einige Bauteile im Schnitt dargestellt sind;

Fig. 1b  eine Ansicht der ersten erfindungsgemäßen Vorrichtung, die gegenüber der Ansicht der Fig. 1a um 90° um die Längsachse gedreht ist;

Fig. 2a  eine zweite erfindungsgemäße Vorrichtung im Reinigungszustand;

Fig. 2b  die zweite erfindungsgemäße Vorrichtung im Reinigungsband-Wechselzustand;

Fig. 3  eine dritte erfindungsgemäße Vorrichtung mit einer Extruderschraube unmittelbar am Ausgang der Reinigungsvorrichtung;

Fig. 4a  eine vierte erfindungsgemäße Vorrichtung mit einer konischen Verjüngung hinter einer Lochplatte;

Fig. 4b  ein Hydraulik-Schema für eine erfindungsgemäße Reinigungsvorrichtung;

Fig. 5  eine fünfte erfindungsgemäße Vorrichtung, bei der das Reinigungssieb nicht mit dem zu reinigenden Material bewegt wird.

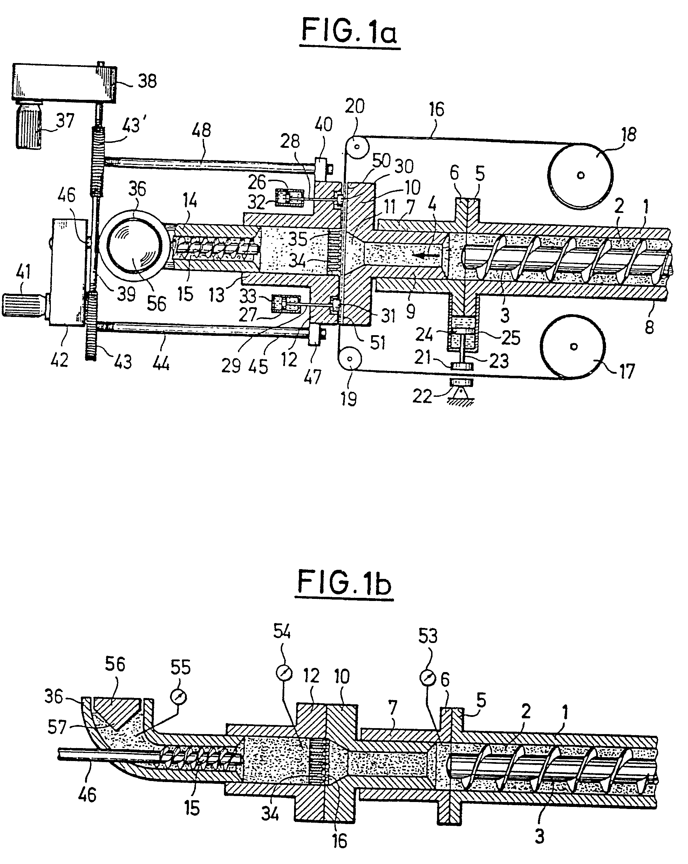

In der Fig. 1a ist eine Ausführungsform der Erfindung schematisch dargestellt, wobei nur die wesentlichen Bauelemente gezeigt und alle unwesentlichen Teile weggelassen sind. Man erkennt hierbei einen Transportkanal bzw. ein Rohr 1, in dem viskoses Material 2, das z. B. aus geschmolzenem Kunststoff-Altmaterial besteht, mit Hilfe einer Extrusionsschraube 3 in Richtung des Pfeils 4 unter hohem durch bewegt wird. Der Transportkanal bzw. das Rohr 1 weist an seinem einen Ende einen Flansch 5 auf, der dem Flansch 6 eines zweiten Rohrs 7 gegenüberliegt. Das andere Ende 8 des Rohrs 1 führt zu einer nicht dargestellten Kunststoff-Zuführeinrichtung. In dem Rohr 7 ist ein anderes Rohr 9 verschiebbar angeordnet. Dieses Rohr 9, das ebenfalls die Funktion eines Transportkanals hat, weist an seiner einen Seite einen kräftigen Flansch 10 auf, der mit einem erweiterten Durchflußkanal 11 versehen ist. Dieser Flansch 10 stößt gegen einen Gegenflansch 12 eines weiteren Stutzen oder Rohrs 13, das ein Extruderrohr 14 mit einer Extruderschraube 15 umfaßt.

Zwischen dem Flansch 10 und dem Gegenflansch 12 verläuft ein bandförmiges Reinigungssieb 16, das von einer ersten Trommel 17 abgewickelt und auf eine zweite Trommel 18 aufgewickelt wird. Der Wickelsinn kann selbstverständlich auch umgekehrt werden, so daß das Reinigungssieb 16 von der Trommel 18 auf die Trommel 17 gewickelt wird. Hierbei läuft das bandförmige Reinigungssieb 16 über zwei Stützrollen 19, 20. Dieses bandförmige Reinigungssieb 16 durchläuft auch zwei Bremsbacken 21, 22, von denen die eine ortsfest und die andere beweglich ist. Die bewegliche Bremsbacke 21 ist an einer Kolbenstange 23 angeordnet, deren anderes Ende an einem Kolben 24 befestigt, ist, der sich in einem Zylinder 25 bewegt. Die Antriebsmechanismen für den Kolben 24 sind nicht dargestellt. Für die Wirkungsweise der Erfindung ist lediglich von Bedeutung, daß der Kolben 24 innerhalb des Zylinders 25 bewegt werden kann. Entsprechendes gilt auch für zwei weitere Kolben 26, 27, die dazu dienen, das Siebband 16 über die Kolbenstangen 28, 29 und mit Hilfe von Andruckbacken 30, 31 an den Flansch 10 anzudrücken. Die Zylinder 32, 33, in denen sich die Kolben 26, 27 befinden, sind hierbei lediglich schematisch angedeutet.

Gegenüber dem erweiterten Durchflußkanal 11 des Flanschs 10 befindet sich eine Lochplatte 34, die zahlreiche Durchbohrungen 35 aufweist. Durch diese Durchbohrungen 35 gelangt der zähflüssige Kunststoff in Form von zylindrischen Strängen, die sich sodann wieder zu einem gemeinsamen Strang vereinen und dem Extruder 15 zugeführt werden. Dieser Extruder 15 befördert den gereinigten und noch flüssigen Kunststoff in eine Vorrichtung 36, wo Produkte wie Folien oder Rohre hergestellt werden können. Die in der Fig. 1 dargestellte Vorrichtung zeigt somit nicht nur eine Kunststoff-Reinigungsanlage mit Siebvorrichtung, sondern gleichzeitig eine Vorrichtung für die Herstellung von Produkten aus dem gereinigten Kunststoff-Material. Der Gegenflansch 12 ist über eine Stange 48 mit einem Antrieb verbunden, der beispielsweise einen Elektromotor 37 mit einem Getriebe 38 und einer Antriebs-Schnecke 39 besteht.

Mit Hilfe des Motors wird auch die Stange 44 bewegt, so daß beide Stangen 44, 48 synchron bewegt werden. Die Antriebsschnecke 39 treibt hierbei die Zahnräder 43, 43' an, die jeweils eine mit Zahnungen versehene Bohrung aufweisen, in welche die zumindest an ihren Enden als Spindel ausgebildeten Stangen geschoben sind.

Der Motor 41 mit dem Getriebe 42 dient nur als Antrieb der Extruderschnecke 15.

Die Funktionsweise der in der Fig. 1 dargestellten Vorrichtung ist nun die, daß während des normalen Betriebs die Extruderschraube 3 den zähflüssigen und verschmutzten Kunststoff 2 unter hohem Druck gegen das bandförmige Reinigungssieb 16 preßt, und zwar dort, wo sich die Lochplatte 34 befindet. Diese Lochplatte 34 ist integraler Bestandteil des Gegenflanschs 12 und nimmt somit die ganzen Druckkräfte auf. Ist das bandförmige Reinigungssieb 16 an der auf der Lochplatte 34 aufliegenden Stelle verschmutzt, so wird es durch einen Antrieb, der sich beispielsweise an der Trommel 18 bzw. an der Trommel 17 befindet, weitertransportiert.

Wie weiter unten noch beschrieben wird, ist indessen auch ein anderer Antrieb möglich. Zuvor müssen jedoch die Andruckbacken 30, 31 gelöst werden. Ohne besondere Maßnahme würde dann, wenn sich die Andruckbacken 30, 31 lösten, der zähflüssige Kunststoff 2 durch die Spalten 50, 51 herausgedrückt werden und in relativ kurzer Zeit der Außenraum mit erheblichen Mengen Kunststoff anfüllen.

Die Spalten 50, 51 können zur Abdichtung nicht beliebig eng gemacht werden, da es sonst nicht möglich wäre, das bandförmige Reinigungssieb 16 weiterzuschieben. Somit sind während des Bandtransports stets relativ breite Spalten 50, 51 vorhanden, durch die große Mengen von Kunststoff herausfließen können.

Bei der erfindungsgemäßen Vorrichtung wird das Herausfließen des Kunststoffs dadurch verhindert, daß der Druck des flüssigen Kunststoffs an der Berührungsstelle von Lochplatte 34 und Reinigungssieb 16 nahezu auf Null gebracht wird. Hierdurch wird ein doppelter Effekt erzielt: zum einen läßt sich das Siebband 16 leichter transportieren und zum anderen dringen keine Kunststoffmassen durch die Spalten 50, 51.

Um diese Druckverminderung zu erreichen, werden der Gegenflansch 12 sowie der Flansch 10 mit dem Transportkanal bzw. dem Rohr 9 relativ zu dem Rohr 7 verschoben. Dabei wird die Verschiebegeschwindigkeit so gewählt, daß sie der Fließgeschwindigkeit des zähflüssigen Kunststoffs 2 am Ende des erweiterten Durchflußkanals 11 entspricht. Ist diese Bedingung erfüllt, so herrscht am bandförmigen Reinigungssieb 16 kein Überdruck des Kunststoffs mehr, und das Reinigungssieb 16 kann nach Lösen der Andruckbacken 30, 31 weitertransportiert werden.

Die Linearbewegung von Gegenflansch 12, Flansch 10 und Rohr 7 wird hierbei, wie oben bereits beschrieben, durch die Antriebe 37, 38 bewirkt.

Deren Antriebskraft kann gleichzeitig dazu ausgenutzt werden, um das Reinigungsband 16 zu transportieren. Werden nämlich beim linearen Bewegen des Bauteils 9, 10, 12 die Bremsbacken 21, 22 geschlossen, so wird das Reinigungsband 16 an dieser Stelle festgehalten, was bedeutet, daß das Reinigungsband 16 von der Trommel 18 abgerollt wird und ein unverschmutzter Bereich dieses Bands 16 nun der Lochplatte gegenüberliegt. Nachdem dies geschehen ist, werden die Bremsbacken 21, 22 wieder gelöst, die Andruckbacken 30, 31 an das Reinigungsband 16 gedrückt und die ganze Einheit 9, 10, 12 wieder nach rechts in Richtung auf die Extrusionsschraube 3 gefahren.

In der Fig. 1b ist dieselbe Vorrichtung wie in der Fig. 1a gezeigt, jedoch um 90 Grad um die Längsachse der Extrusionsschraube 3 gedreht. Zusätzlich sind noch drei Druckanzeiger 53, 54, 55 dargestellt, welche an besonders kritischen Stellen den Druck messen und anzeigen.

Man kann den Siebwechselvorgang durch Überwachung der Druckverhältnisse vollständig automatisieren, da z. B. der vom Druckanzeiger 53 angezeigte Druck vom Verschmutzungsgrad des Siebs 16 abhängt. Überschreitet der Druck einen vorgegebenen Wert, so können die Andruckbacken 30, 31 gelöst, die Bremsbacken 21 betätigt und die Motoren 37, 41 in Betrieb genommen werden.

Am Ende des Extrusionsrohrs 36 ist ein Dorn 56 mit kegelförmiger Spitze 57 vorgesehen, der es gestattet, beispielsweise Kunststoff-Rohre herzustellen.

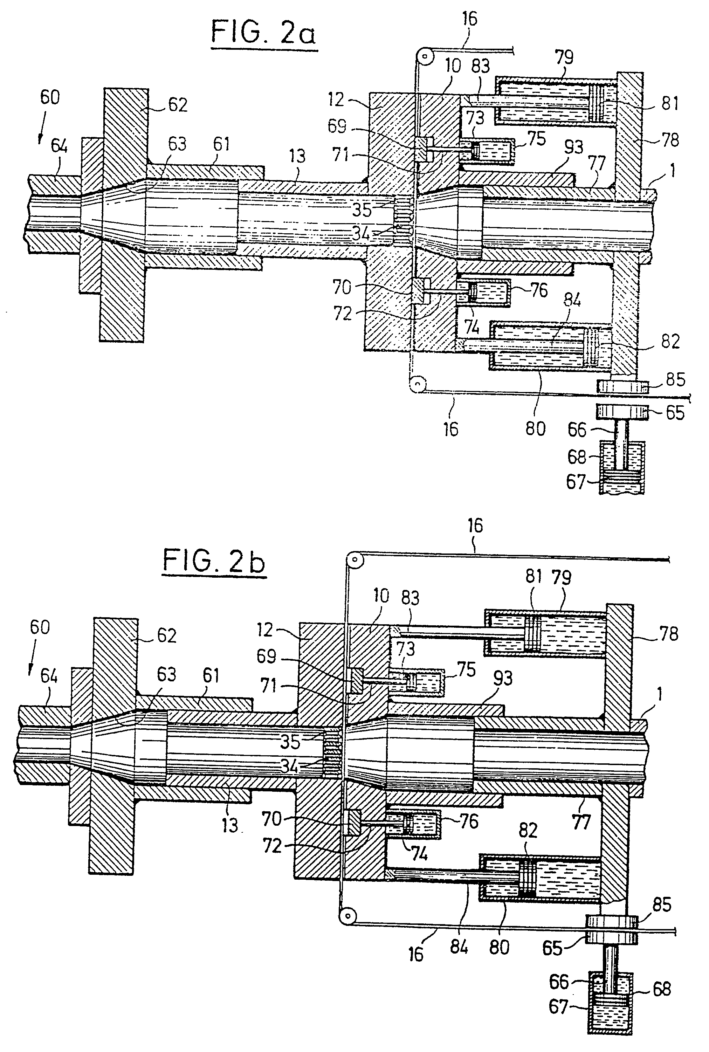

In der Fig. 2a ist eine andere Ausführungsform der Erfindung dargestellt, die einen Einsatz in einer längeren Maschinenstrecke gestattet, in der mehrere Maschineneinheiten hintereinander und z.T. unverrückbar angeordnet sind. Nimmt man beispielsweise an, daß sich an der Stelle 60 eine unverrückbare Maschineneinheit befindet, so würde die Linearbewegung der erfindungsgemäßen Vorrichtung störend wirken, weil ein Anstoßen unvermeidlich wäre. Um dies zu verhindern, ist das Rohr 13 seinerseits in einem größeren Rohr 61 verschiebbar angeordnet, das mit einem Flansch 62 verbunden ist, der eine konische Durchbohrung 63 aufweist, die in ein Rohr 64 mündet. Wenn der Flansch 12 nach links verschoben wird, können der Flansch 62, das Rohr 64 und die Maschineneinheit an der Stelle 60 unverrückt bleiben.

Im Gegensatz zur Fig. 1a wird das Reinigungsband 16 nicht von einer beweglichen Bremsbacke 21 angehalten, die mit dem Rohr 1 in Verbindung steht, sondern von einer von außen beweglichen Bremsbacke 65, die über eine Kolbenstange 66 mit einem Kolben 67 verbunden ist, der sich in einem Zylinder 68 bewegt.

Dieser Zylinder 68 ist mit einer nicht dargestellten ortsfesten Vorrichtung verbunden.

Die Andruckbacken 69, 70, welche das Siebband gegen einen Flansch andrücken, sind auf der Seite des Flanschs 10 angeordnet und drücken gegen den Flansch 12. Sie werden vorzugsweise hydraulisch betätigt, und zwar über die Kolbenstangen 71, 72, die mit jeweils einem Kolben 73, 74 verbunden sind, der sich in einem Zylinder 75, 76 bewegt.

Das mit dem Rohr 1 verbundene Rohrstück 77 greift in das Rohr, bzw. in den Stutzen 93 ein und umfaßt dieses nicht, wie es in der Fig. 1a gezeigt ist. Ein Flansch 78 zwischen den Rohren 1 und 77 trägt die Zylinder 79, 80, in denen sich Kolben 81, 82 befinden, die über Kolbenstangen 83, 84 mit, dem Flansch 10 verbunden sind. Die Bauelemente 79, 80, 81, 82, 83, 84 bilden zusammen einen hydraulischen Antrieb, der den Flansch 78 auf den Flansch 10 zu oder von diesem wegbewegen kann. Es sind also keine Elektromotoren für diese Bewegung erforderlich, wie es etwa in der Fig. 1a gezeigt ist.

Die Fig. 2a zeigt den Zustand der erfindungsgemäßen Vorrichtung, bei dem das Siebband 16 fest eingespannt ist, während sich die Bremsbakken 65, 85 im geöffneten Zustand befinden.

Bei der Figur 2b sind die Verhältnisse gerade umgekehrt.

In der Fig. 2a ist somit der normale Arbeitszustand dargestellt, während die Fig. 2b den Transport des Reinigungssiebs 16 zeigt.

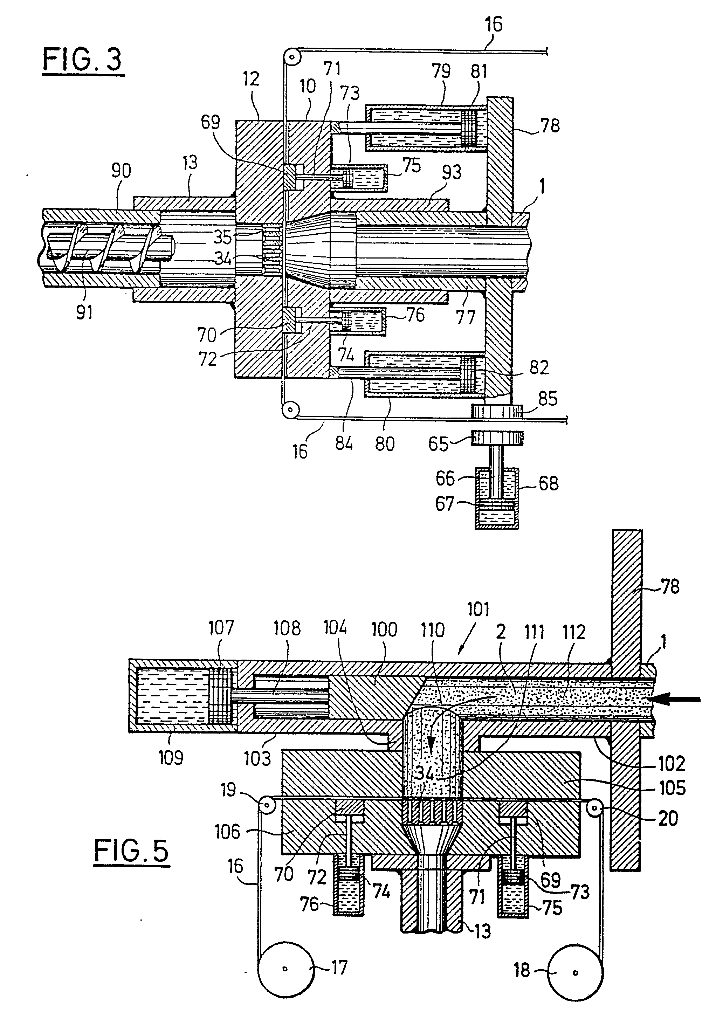

Die Fig. 3, stellt eine Vorrichtung dar, die im wesentlichen der Vorrichtung gemäß Fig. 2a entspricht. Das Ausgangsrohr bzw. der Stutzen 13 umgibt hier jedoch ein Extruderrohr 90 mit einer Extruderschraube 91.

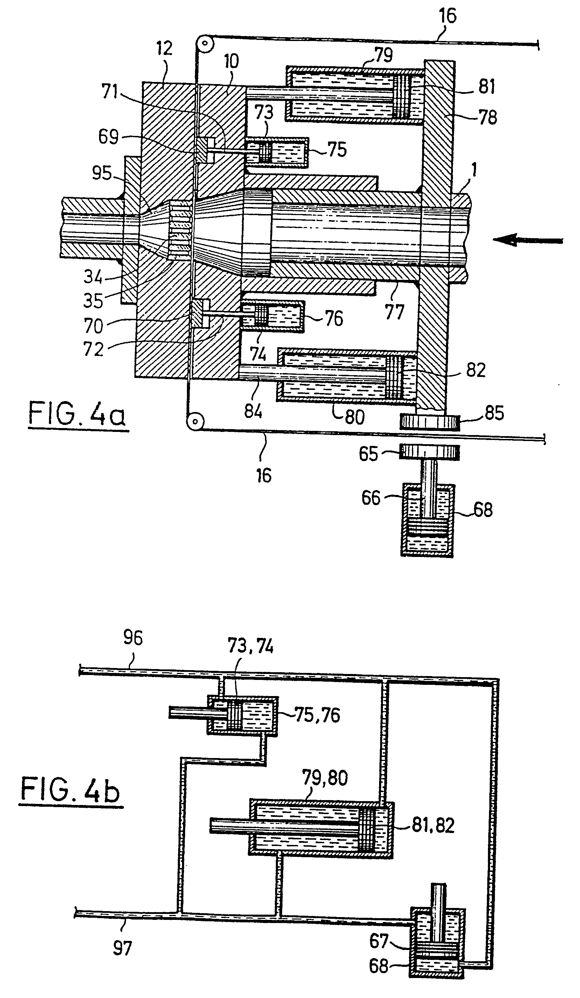

In der Fig. 4a ist eine weitere Variante der erfindungsgemäßen Vorrichtung gezeigt, die hinter der Lochplatte 34 eine konische Verjüngung 95 aufweist.

Zu dieser Vorrichtung ist in der Fig. 4b ein vereinfachtes Hydraulikschema dargestellt, das die drei verschiedenen Hydraulik-Einrichtungen 75, 76 bzw. 79, 80 bzw. 68 zeigt.

Alle dieser Hydraulik-Einrichtungen sind an dieselben Hydraulik-Leitungen 100, 101 angeschlossen. Wird Druck auf die Leitung 196 gegeben, so bewegen sich die Kolben 73, 74 nach rechts, während sich die Kolben 81, 82 nach links bewegen. Zur gleichen Zeit bewegt sich der Kolben 67 nach oben.

Wird dagegen Druck auf die Leitung 97 gegeben, so bewegen sich die Kolben 73, 74 nach links, die Kolben 81, 82 bewegen sich nach rechts und der Kolben 67 bewegt sich nach unten.

Es versteht sich, daß die Antriebe nicht nur hydraulisch oder elektrisch, sondern auf jede andere bekannte Weise ausgeführt sein können.

Es ist ferner ersichtlich, daß die Erfindung durch geringfügige Abwandlungen auch für die Reinigung von normalen Flüssigkeiten wie Wasser oder Säuren verwendet werden kann.

In der Fig. 5 ist eine weitere Variante der Erfindung dargestellt, bei welcher die Volumenvergrößerung nicht durch eine Bewegung des Reinigungssiebs 16 in Richtung der Bewegung des zu reinigenden Materials 2 erfolgt. Vielmehr bleibt das Reinigungssieb 16 in Bezug auf das Material 2 stets stationär. Die Volumenvergrößerung wird stattdessen mit einem verschiebbaren Kolben 100 erzielt, der in einem Zuführungskanal 101 angeordnet ist. Dieser Zuführungskanal 101 besteht aus einem vorderen Bereich 102 und einem hinteren Bereich 103, wobei zwischen beiden Bereichen ein abzweigender Kanal 104 vorgesehen ist. Dieser abzweigende Kanal 104 verläuft in der Fig. 5 senkrecht zu dem Kanal 101; er kann jedoch auch einen beliebigen anderen Winkel einnehmen. Der abzweigende Kanal 104 setzt sich in einem Flansch 105 fort, dem ein weiterer Flansch 106 gegenüberliegt. Zwischen den beiden Flanschen 105, 106 ist das Reinigungssieb 16 in der üblichen Weise angeordnet.

Wird der Kolben 100 in dem Bereich 103 des Zuführungskanals 101 mit Hilfe eines Hydraulikkolbens 107 und einer Kolbenstange 108 von rechts nach links bewegt, so wird das für das Material 2 zur Verfügung stehende Volumen vergrößert, und der Druck auf das Reinigungssieb 16 nimmt ab. Der Kolben 100 ist zweckmäßigerweise an seiner Stirnseite abgeschrägt, so daß noch keine Abriegelung des vorderen Bereichs 102 vom abzweigenden Kanal 104 stattfindet, wenn die Spitze der abgeschrägten Stirnseite über dem Ende des vorderen Bereichs 102 steht. Bei entsprechender Dimensionierung der Kolbenstange 108 und des Gehäuses 109 kann der Kolben 100 auch dazu dienen, den Raum 111 vom Raum 112 durch eine Bewegung von links nach rechts abzuriegeln. Die in der Fig. 5 gezeigte Vorrichtung kann leicht mit einer Vorrichtung gemäß den Figuren 1 bis 4b kombiniert werden bzw. umgekehrt. Hierzu muß im Anschluß an den Flansch 106 lediglich der bereits oben beschriebene Antrieb vorgesehen werden.

Allen Ausführungsformen der Erfindung ist gemeinsam, daß das Volumen vor dem Reinigungssieb, d.h. dort, wo sich das ungereinigte Material befindet, geändert, und zwar vorzugsweise vergrößert wird.

**Patentansprüche**

1. Vorrichtung für die Reinigung von viskosen Materialien, mit einer Einrichtung, welche das viskose Material durch ein Reinigungssieb drückt, das bandförmig ausgebildet und quer zur Flußrichtung des viskosen Materials beweglich ist, *dadurch gekennzeichnet,* daß der Raum vor dem Reinigungssieb (16), der das zu reinigende Material (2) aufnimmt, nach außen hin geschlossen bleibt und wenigstens zeitweise volumenmäßig veränderbar ist, so daß der durch das zu reinigende Material (2) auf das Reinigungssieb (16) ausgeübte Druck aufgrund der Volumenänderung variabel ist, um den Weitertransport des Reinigungssiebs zu ermöglichen.

2. Vorrichtung nach Anspruch 1, *dadurch gekennzeichnet,* daß wenigstens diejenige Stelle des Reinigungssiebs (16), die mit dem viskosen Material (2) beaufschlagt wird, wenigstens zeitweise in Richtung der Bewegungsrichtung des viskosen Materials (2) bewegbar ist, so daß sich der Raum vor dem Reinigungssieb (16) vergrößert.

3. Vorrichtung nach Anspruch 1, *dadurch gekennzeichnet,* daß der Raum durch Herausnahme eines Teils, z. B. eines Kolbens (100) vergrößerbar ist.

4. Vorrichtung nach Anspruch 2, *dadurch gekennzeichnet,* daß das bandförmige Reinigungssieb (16) in einer Lagervorrichtung (10, 12) mit einem ersten Transportkanal in einem Rohr (9) angeordnet ist, wobei dieser Transportkanal relativ zu einem zweiten Transportkanal in anderen Rohren (7, 1) verschiebbar ist.

5. Vorrichtung nach Anspruch 2, *dadurch gekennzeichnet,* daß die Rohre (9 und 7 bzw. 1) teleskopartig ineinander greifen.

6. Vorrichtung nach Anspruch 1, *dadurch gekennzeichnet,* daß das bandförmige Reinigungssieb (16) wenigstens an einer Stelle an einer Lochplatte (34) aufliegt.

7. Vorrichtung nach Anspruch 4, *dadurch gekennzeichnet,* daß die Lagervorrichtung (10, 12) einen Spalt (50, 51) aufweist, durch den das bandförmige Reinigungssieb (16) senkrecht zur Flußrichtung des viskosen Materials (2) bewegbar ist.

8. Vorrichtung nach Anspruch 4, *dadurch gekennzeichnet,* daß die Lagervorrichtung (10, 12) aus zwei Flanschen (10, 12) gebildet ist, von denen der eine Flansch (10) ein Rohr (9) aufweist, das von dem anderen Rohr (7) umfaßt wird, in dem das viskose Material (2) angeliefert wird.

9. Vorrichtung nach Anspruch 4, *dadurch gekennzeichnet,* daß in dem zweiten Transportkanal im anderen Rohr (1) eine Extrusionsschraube (3) angeordnet ist;

10. Vorrichtung nach Anspruch 2, *dadurch gekennzeichnet,* daß das bandförmige Reinigungssieb (16) während seiner Bewegung in Richtung des Flusses des viskosen Materials (2) an wenigstens einer Stelle durch Bremsmittel (21, 22) angehalten wird.

11. Vorrichtung nach Anspruch 2, *dadurch gekennzeichnet,* daß das bandförmige Reinigungssieb (16) von einer ersten Trommel (18) abwickelbar und auf eine zweite Trommel (17) aufwickelbar ist.

12. Vorrichtung nach Anspruch 11, *dadurch ge-*

*kennzeichnet* daß das bandförmige Reinigungssieb (16) über Stützrollen (19, 20) geführt ist.

13. Vorrichtung nach einem oder nach mehreren der vorangegangenen Ansprüche, *dadurch gekennzeichnet,* daß Druckvorrichtungen (30, 31) vorgesehen sind, welche das bandförmige Reinigungssieb (16) gegen einen Flansch (10) pressen.

14. Vorrichtung nach einem oder nach mehreren der vorangegangenen Ansprüche, *dadurch gekennzeichnet,* daß die Lagervorrichtung (10, 12) für das bandförmige Reinigungssieb (16) mittels Motoren (37, 41) und Getrieben (38, 42, 39, 43, 44, 40) bewegbar ist.

15. Vorrichtung nach einem oder nach mehreren der vorangegangenen Ansprüche, *dadurch gekennzeichnet,* daß am Ausgang des Reinigungssiebs (16) eine Extruderschraube (14, 15) vorgesehen ist.

16. Vorrichtung nach einem oder nach mehreren der vorangegangenen Ansprüche, *dadurch gekennzeichnet,* daß der erste Transportkanal im Rohr (9) In der Nähe des Reinigungssiebs (16) einen erweiterten Durchflußkanal (11) besitzt.

17. Vorrichtung nach einem oder nach mehreren der vorangegangenen Ansprüche *dadurch gekennzeichnet* daß Druckmeßvorrichtungen (53, 54, 55) vorgesehen sind, welche den Druck des viskosen Materials (2) an einer oder an mehreren Stellen messen.

18. Vorrichtung nach einem oder nach mehreren der vorangegangenen Ansprüche, *dadurch gekennzeichnet,* daß die Lagervorrichtung (10, 12) sowohl gegenüber dem zweiten Transportkanal (7, 1) als auch gegenüber einem dritten Transportkanal in einem weiteren Rohr (61) verschiebbar ist.

19. Vorrichtung nach einem oder nach mehreren der vorangegangenen Ansprüche, *dadurch gekennzeichnet,* daß zwischen der Lagervorrichtung (10, 12) und einer mit dem Rohr (7, 77) des zweiten Transportkanals fest verbundenen Vorrichtung (78) ein parallel zur Achse des Rohres (7, 77) wirkender Antrieb (79, 81, 83, 80, 82, 84) vorgesehen ist.

20. Vorrichtung nach einem oder nach mehreren der vorangegangenen Ansprüche *dadurch gekennzeichnet,* daß Andruckbacken (69, 70) vorgesehen sind, welche das Reinigungssieb (16) gegen einen Flansch (12) drücken, der auf der Seite der Lochplatte (34) angeordnet ist.

21. Vorrichtung nach einem oder nach mehreren der vorangegangenen Ansprüche, *dadurch gekennzeichnet,* daß der Flansch (10) einen Stutzen (93) aufweist, der das Rohr (77) umfaßt.

22. Vorrichtung nach einem oder nach mehreren der vorangegangenen Ansprüche, *dadurch gekennzeichnet,* daß der mit der Lochplatte (34) verbundene Flansch (12) einen Stutzen (13) aufweist, der von einem Rohr (61) umfaßt wird.

23. Vorrichtung nach einem oder nach mehreren der vorangegangen Ansprüche, *dadurch gekennzeichnet,* daß der mit der Lochplatte (34) verbundene Gegenflansch (12) einen Stutzen (13) aufweist, der ein Rohr (90) umfaßt, welches ein Fordergerät enthält.

24. Vorrichtung nach einem oder nach mehreren der vorangegangenen Ansprüche, *dadurch gekennzeichnet,* daß der mit der Lochplatte (34) verbundene Flansch (12) hinter der Lochplatte (34) eine konische Verjüngung (95) aufweist.

25. Vorrichtung nach Anspruch 3, *dadurch gekennzeichnet,* daß ein Zuführungskanal (101) zu dem Reinigungssieb (16) im wesentlichen zwei senkrecht zueinander verlaufende Abschnitte (111, 112) aufweist und daß der Kolben (100) entlang der Achse eines Abschnitts (112) bewegbar angeordnet ist.

26. Vorrichtung nach Anspruch 3, *dadurch gekennzeichnet,* daß der Raum vor dem Reinigungssieb (16) sowohl durch Herausnahme eines Teils, z. B. des Kolbens (100) als auch durch Bewegung des Reinigungssiebs (16) mit dem viskosen Material (2) vergrößerbar ist.

27. Vorrichtung nach einem oder nach mehreren der vorangegangenen Ansprüche, *dadurch gekennzeichnet,* daß die Löcher (35) in der Lochplatte (34) konisch ausgebildet sind.

28. Verfahren für die Reinigung von viskosen Materialien, wobei die viskosen Materialien im geschmolzenen Zustand und unter Druck durch ein bewegliches bandförmiges Filter gegeben werden, dessen dem Versorgungsraum zugewandte Seite Verunreinigungen zurückhält, *gekennzeichnet durch* folgende Verfahrensschritte:

a) Verminderung des vom viskosen Material auf die dem Versorgungsraum zugewandte Seite des Filters ausgeübten Drucks;

b) zeitweise Aufhebung des Abdichtungsdrucks zwischen dem Filter und einem ersten Raum, der das geschmolzene Material heranführt, und zwischen dem Filter und einem zweiten Raum, der das gefilterte geschmolzene Material aufnimmt;

c) Anhalten des Bandfilters; Weiterbewegen des Filters quer zur Fließrichtung des viskosen Materials, bis eine verunreinigte Bandstrecke durch eine saubere Bandstrecke ersetzt ist;

d) Anhalten des Bandfilters in dieser Position; Wiederabdichten des Komplexes "erster Raum - Filter - zweiter Raum", wobei das vom Versorgungsraum in Richtung auf das Bandfilter fließende Material gleichzeitig wieder unter Druck gesetzt wird und der Filtervorgang fortgesetzt wird.

29. Verfahren nach Anspruch 28, *dadurch gekennzeichnet,* daß die Verminderung des Drucks des viskosen Materials am Bandfilter dadurch bewirkt wird, daß das ursprüngliche Volumen des Versorgungsraums vergrößert wird, und daß das viskose Material dadurch unter Druck gesetzt wird, daß der Versorgungsraum wieder auf sein ursprüngliches Volumen gebracht wird.

## Claims

1. Apparatus for cleaning viscous materials with an arrangement which passes the viscous material through a cleaning screen which is of strip-shaped construction and is movable crossways with respect to the direction of flow of the viscous material, characterised in that the chamber before the cleaning screen (16) which receives the material (2) to be cleaned remains closed towards the exterior and is variable at least temporarily in its volume so that the pressure exerted on the cleaning screen (16) by the material which is to be cleaned is variable as a function of the variation in volume in order to facilitate the further transport of the cleaning screen.

2. Apparatus as claimed in claim 1, characterised in that at least the part of the cleaning screen (16) which is acted upon by the viscous material (2) is movable at least temporarily in the direction of movement of the viscous material (2) so that the chamber before the cleaning screen (16) is enlarged.

3. Apparatus as claimed in claim 1, characterised in that the chamber can be enlarged by taking out a part, e. g. a piston (100).

4. Apparatus as claimed in claim 2, characterised in that the strip-shaped cleaning screen (16) is arranged in a bearing device (10, 12) with a first transport channel in a tube (9), the said transport channel being movable relative to a second transport channel in other tubes (7, 1).

5. Apparatus as claimed in claim 2, characterised in that the tubes (9 and 7 or 1) engage in one another telescopically.

6. Apparatus as claimed in claim 1, characterised in that the strip-shaped cleaning screen (16) butts against a perforated plate (34) at least at one point.

7. Apparatus as claimed in claim 4, characterised in that the bearing device (10, 12) has a gap (50, 51) through which the strip-shaped cleaning screen (16) is movable at right angles to the direction of flow of the viscous material (2).

8. Apparatus as claimed in claim 4, characterised in that the bearing device (10, 12) is formed from two flanges (10, 12) of which one flange (10) has a tube (9) which is surrounded by the other tube (7) in which the viscous material is delivered.

9. Apparatus as claimed in claim 4, characterised in that an extrusion screw (3) is arranged in the second transport channel in the other tube (1).

10. Apparatus as claimed in claim 2, characterised in that the strip-shaped cleaning screen (16) is retained at least at one point by braking means (21, 22) during its movement in the direction of flow of the viscous material (2).

11. Apparatus as claimed in claim 2, characterised in that the strip-shaped cleaning screen (16) can be unwound from a first drum (18) and wound onto a second drum (17).

12. Apparatus as claimed in claim 11, characterised in that the strip-shaped cleaning screen (16) is guided over supporting rollers (19, 20).

13. Apparatus as claimed in one or more of the preceding claims, characterised in that pressure devices (30, 31) are provided which press the strip-shaped cleaning screen (16) against a flange (10).

14. Apparatus as claimed in one or more of the preceding claims, characterised in that the bearing device (10, 12) for the strip-shaped cleaning screen (16) is movable by means of motors (37, 41) end gears (38, 42, 39, 43, 44, 40).

15. Apparatus as claimed in one or more of the preceding claims, characterised in that an extruder screw (14, 15) is provided at the outlet of the cleaning screen (16).

16. Apparatus as claimed in one or more of the preceding claims, characterised in that the first transport channel in the tube (9) has a widened passage (11) near the cleaning screen (16).

17. Apparatus as claimed in one or more of the preceding claims, characterised in that pressure measuring devices (53, 54, 55) are provided which measure the pressure of the viscous material (2) at one or more points.

18. Apparatus as claimed in one or more of the preceding claims, characterised in that the bearing device (10, 12) is displaceable both with respect to the second transport channel (7, 1) and with respect to a third transport channel in a further tube (61).

19. Apparatus as claimed in one or more of the preceding claims, characterised in that a drive (79, 81. 83, 80, 82, 84) which acts parallel to the axis of the tube (7, 77) is provided between the bearing device (10, 12) and a device (78) connec-

15

ted to the tube (7, 77) of the second transport channel.

20. Apparatus as claimed in one or more of the proceding claims, characterised in that pressure jaws (69, 70) are provided which press the cleaning screen (16) against a flange (12) which is arranged on the side of the perforated plate (34).

21. Apparatus as claimed in one or more of the preceding claims, characterised in that the flange (10) has a tube (93) which surrounds the tube (77).

22. Apparatus as claimed in one or more of the preceding claims, characterised in that the flange (12) connected to the perforated plate (34) has a tube (13) which is surrounded by a tube (61).

23. Apparatus as claimed in one or more of the preceding claims, characterised in that the counter-flange (12) connected to the perforated plate (34) has a tube (13) which surrounds a tube (90) enclosing a conveyor device.

24. Apparatus as claimed in one or more of the preceding claims, characterised in that the flange (12) connected to the perforated plate (34) has a conical taper (95) behind the perforated plate (34).

25. Apparatus as claimed in claim 3, characterised in that e supply channel (101) to the cleaning screen (16) essentially has two chambers (111, 112) which extend parallel to one another, and the piston (100) is arranged so as to be movable along the axis of a chamber (112).

26. Apparatus as claimed in claim 3, characterised in that the space in front of the cleaning screen (16) can be enlarged both by taking out a part, e.g. the piston (100) and by moving the cleaning screen (16) with the viscous material (2).

27. Apparatus as claimed in one or more of the preceding claims, characterised in that the holes (35) in the perforated plate (34) are of conical construction.

28. Method of cleaning viscous materials, in which the viscous materials in the molten state and under pressure are passed through a movable strip-shaped filter, the side of which facing the supply chamber retains impurities, characterised by the following steps:

a) reduction of the pressure exerted by the viscous material on the side of the filter facing the supply chamber;
b) temporary elimination of the sealing pressure between the filter and a first chamber which feeds the molten material and between the filter and a second chamber which receives the filtered molten meterial;
c) stopping the strip filter; further movement of

16

the filter crossways with respect to the direction of flow of the viscous meterial until a soiled area of the strip has been replaced by a clean area;
d) immobilising the strip filter in this position; resealing of the "first chamber - filter - second chamber" complex, the material flowing from the supply chamber in the direction of the strip filter being simultaneously put under pressure again and the filtering operation being continued.

29. Method as claimed in claim 28, characterised in that the reduction of the pressure of the viscous material on the strip filter is effected by increasing the original volume of the supply chamber, and the viscous material is thereby put under pressure by bringing the supply chamber back to its original volume.

**Revendications**

1. Dispositif de nettoyage de matériaux visqueux, comprenant un dispositif qui presse le matériau visqueux à travers un tamis de nettoyage qui est réalisé en forme de bande et est mobile transversalement à la direction d'écoulement du matériau visqueux, caractérisé en ce que l'espace situé devant le tamis de nettoyage (16) qui reçoit le matériau à nettoyer (2), reste fermé vers l'extérieur et peut être modifié en volume au moins temporairement, si bien que la pression exercée par le matériau à nettoyer (2) sur le tamis de nettoyage (16) est variable du fait du changement de volume afin de permettre le déplacement du tamis de nettoyage.

2. Dispositif selon la revendication 1, caractérisé en ce qu'au moins l'endroit du tamis de nettoyage (16) qui est en contact avec le matériau à nettoyer (2) peut être déplacé au moins de temps en temps dans la direction de déplacement du matériau visqueux (2), si bien que l'espace situé devant le tamis de nettoyage (16) s'accroît.

3. Dispositif selon la revendication 1, caractérisé en ce que l'espace peut être agrandi par extraction d'une pièce, par exemple d'un piston (100).

4. Dispositif selon la revendication 2, caractérisé en ce que le tamis de nettoyage en forme de bande (16) est disposé dans un dispositif de support (10, 12) équipé d'un canal de transport dans un tube (9), ce canal de transport pouvant être déplacé relativement à un deuxième canal de transport dans d'autres tubes (7, 1).

5. Dispositif selon la revendication 2, caractérisé en ce que les tubes (9 et 7 ou 1) s'engagent les uns dans les autres de manière télescopique.

6. Dispositif selon la revendication 1, caractérisé en ce que le tamis de nettoyage en forme de bande (16) prend appui à au moins un endroit contre une plaque perforée (34).

7. Dispositif selon la revendication 4, caractérisé en ce que le dispositif de support (10, 12) présente une fente (50, 51) par laquelle le tamis de nettoyage en forme de bande (16) peut être déplacé perpendiculairement à la direction d'écoulement du matériau visqueux (2).

8. Dispositif selon la revendication 4, caractérisé en ce que le dispositif de support (10, 12) est composé de deux brides (10, 12) dont l'une (10) présente un tube (9) qui est entouré par l'autre tube (7) dans lequel le matériau visqueux (2) est fourni.

9. Dispositif selon la revendication 4, caractérisé en ce qu'une vis d'extrusion (3) est disposée dans le deuxième canal de transport dans l'autre tube (1).

10. Dispositif selon la revendication 2, caractérisé en ce que le tamis de nettoyage en forme de bande (16) est retenu à au moins un endroit par des moyens de freinage (21, 22) pendant son déplacement dans la direction d'écoulement du matériau visqueux (2).

11. Dispositif selon la revendication 2, caractérisé en ce que le tamis de nettoyage en forme de bande (16) peut être déroulé d'un premier tambour (18) et enroulé sur un deuxième tambour (17).

12. Dispositif selon la revendication 11, caractérisé en ce que le tamis de nettoyage en forme de bande (16) est guidé sur des poulies de support (19, 20).

13. Dispositif selon l'une quelconque des revendications précédentes, caractérisé en ce que des dispositifs de pression (30, 31) sont prévus qui pressent le tamis de nettoyage en forme de bande (16) contre une bride (10).

14. Dispositif selon l'une quelconque des revendications précédentes, caractérisé en ce que le dispositif de support (10, 12) pour le tamis de nettoyage en forme de bande (16) peut être déplacé au moyen de moteurs (37, 41) et de transmissions (38, 42, 39, 43, 44, 40).

15. Dispositif selon l'une quelconque des revendications précédentes, caractérisé en ce qu'une vis d'extrusion (14, 15) est prévue à la sortie du tamis de nettoyage (16).

16. Dispositif selon l'une quelconque des revendications précédentes, caractérisé en ce que le premier canal de transport dans le tube (9) possède à proximité du tamis de nettoyage (16) un canal d'écoulement élargi (11).

17. Dispositif selon l'une quelconque des revendications précédentes, caractérisé en ce que des dispositifs de mesure de pression (53, 54, 55) sont prévus qui mesurent la pression du matériau visqueux (2) à un ou plusieurs endroits.

18. Dispositif selon l'une quelconque des revendications précédentes, caractérisé en ce que le dispositif de support (10, 12) peut être déplacé aussi bien par rapport au deuxième canal de transport (7, 1) que par rapport à un troisième canal de transport dans un autre tube (61).

19. Dispositif selon l'une quelconque des revendications précédentes, caractérisé en ce qu'un dispositif d'entraînement (79, 81, 83, 80, 82, 84) agissant parallèlement à l'axe du tube (7, 77) est prévu entre le dispositif de support (10, 12) et un dispositif (78) relié de manière fixe avec le tube (7, 77) du deuxième canal de transport.

20. Dispositif selon l'une quelconque des revendications précédentes, caractérisé en ce que des mâchoires de pression (69, 70) sont prévues qui pressent le tamis de nettoyage (16) contre une bride (12) qui est disposée sur le côté de la plaque perforée (34).

21. Dispositif selon l'une quelconque des revendications précédentes, caractérisé en ce que la bride (10) présente une tubulure (93) qui entoure le tube (77).

22. Dispositif selon l'une quelconque des revendications précédentes, caractérisé en ce que la bride (12) reliée à la plaque perforée (34) présente une tubulure (13) qui est entourée par un tube (61).

23. Dispositif selon l'une quelconque des revendications précédentes, caractérisé en ce que la contre-bride (12) reliée à la plaque perforée (34) présente une tubulure (13) qui entoure un tube (90) qui contient un appareil de transport.

24. Dispositif selon l'une quelconque des revendications précédentes, caractérisé en ce que la bride (12) reliée à la plaque perforée (34) présente un rétrécissement conique (95) derrière la plaque perforée (34).

25. Dispositif selon la revendication 3, caractérisé en ce qu'un canal d'amenée (101) présente deux sections (111, 112) s'étendant pour l'essentiel perpendiculairement au tamis de nettoyage (16) et en ce que le piston (100) est disposé mobile le long de l'axe d'une section (112).

26. Dispositif selon la revendication 3, caractérisé en ce que l'espace situé devant le tamis de nettoyage (16) peut être agrandi aussi bien par extraction d'une pièce, par exemple du piston (100) que par un déplacement du tamis de nettoyage (16) avec le matériau visqueux (2).

27. Dispositif selon l'une quelconque des revendications précédentes, caractérisé en ce que les trous (35) de la plaque perforée (34) sont coniques.

28. Procédé de nettoyage de matériaux visqueux, les matériaux visqueux fondus et sous pression traversant un filtre mobile en forme de bande dont le côté tourné vers l'espace d'alimentation retient des impuretés, caractérisé par les étapes opératoires suivantes :

a) Réduction de la pression exercée par le matériau visqueux sur le côté du filtre tourné vers l'espace d'alimentation ;

b) Suppression temporaire de la pression d'étanchéité entre le filtre et un premier espace qui achemine le matériau fondu et entre le filtre et un deuxième espace qui reçoit le matériau fondu ;

c) Arrêt du filtre en forme de bande; déplacement du filtre transversalement à la direction d'écoulement du matériau visqueux jusqu'à ce qu'un morceau de bande encrassé soit remplacé par un morceau de bande propre ;

d) Arrêt du filtre en forme de bande dans cette position; nouvelle étanchéification du complexe "premier espace - filtre - deuxième espace", le matériau s'écoulant de l'espace d'alimentation en direction du filtre en forme de bande étant simultanément de nouveau mis sous pression et le processus de filtrage étant poursuivi.

29. Procédé selon la revendication 28, caractérisé en ce que la réduction de la pression du matériau visqueux sur le filtre en forme de bande est due au fait que le volume initial de l'espace d'alimentation est augmenté et en ce que le matériau visqueux est mis sous pression par le fait que l'espace d'alimentation est de nouveau ramené à son volume initial.

## FIG.1a

## FIG.1b

1

## FIG. 2a

## FIG. 2b

**FIG. 3**

**FIG. 5**

FIG. 4a

FIG. 4b